# EUROPÄISCHE PATENTSCHRIFT

(11) **EP 2 808 282 B1**
(45) Veröffentlichungstag und Bekanntmachung des Hinweises auf die Patenterteilung: **30.08.2017**
(21) Anmeldenummer: 14164410.4
(22) Anmeldetag: 11.04.2014
(51) Int. Cl.: B65H 29/10, B26D 7/32, B29D 30/46, B26D 7/18

(54) **Greifvorrichtung insbesondere für ein Rückzugssystem einer Maschine zur Bearbeitung vom klebrigen Cordmaterial**
Gripping device in particular for a withdrawal system of a machine for processing sticky cord material
Dispositif de préhension notamment pour un système de retour d'une installation pour le traitement de corde collante

(30) Priorität: 29.05.2013 DE 202013102341 U
(43) Veröffentlichungstag der Anmeldung: 03.12.2014
(73) Patentinhaber: Karl Eugen Fischer GmbH, 96224 Burgkunstadt (DE)
(72) Erfinder: Klenner, Ralf, 96272 Hochstadt (DE); Lauer, Stefan, 96247 Schwürbitz (DE)
(74) Vertreter: Patentanwälte Olbricht Buchhold Keulertz

(56) Entgegenhaltungen:
- US-A- 4 383 683
- US-A1- 2002 170 402

## Beschreibung

Die Erfindung betrifft eine Greifvorrichtung insbesondere für ein Rückzugssystem einer Cordschneidanlage gemäß dem Oberbegriff von Anspruch 1.

Derartige Greifvorrichtungen dienen z.B. zur Handhabung von klebrigem und in der Regel dünnem, bandförmigen Cordmaterial, das insbesondere mit Textil- beziehungsweise Stahldrähten versehen ist und beispielsweise zur Herstellung von Autoreifen Verwendung findet. Mit Hilfe der Greifvorrichtung kann das Bandmaterial an einem Ende ergriffen und durch Ziehen in die gewünschte Position gebracht werden, siehe z.B. US 2002/0170402 A1. Häufig erfolgt ein Einsatz derartiger Greifvorrichtungen in Kombination mit einer Schere, wobei das Ende des Bandmaterials mit Hilfe der Greifvorrichtung durch die zwischen einem Obermesser und einem Untermesser der Schere ausgebildete Messeröffnung gezogen wird. Dafür ist die Greifvorrichtung in der Regel mit einem Rückzugssystem kombiniert, das ein Ziehen der Greifvorrichtung mit dem Bandmaterial um die gewünschte Streifenbreite und ein anschließendes Ablegen des Bandmaterials ermöglicht.

Das Bandmaterial wird dabei mit seiner Unterkante in einer Arbeitsebene geführt, in der es von den einzelnen Elementen der Cordschneidanlage unterstützt wird. Die Greifvorrichtung weist ein Greifblech auf, dessen Oberseite in der Arbeitsebene liegt, sodass das Bandmaterial faltenfrei auf dem Greifblech liegen kann.

Zum Ergreifen des Endes des klebrigen Bandmaterials wird die Greifleiste gegenüber dem Greifblech verschwenkt und das Bandmaterial zwischen Greifleiste und Greifblech klemmend gehalten. Dabei werden zum einen Spannungen in das Bandmaterial eingebracht, zum anderen kann es zu einem ungewünschten Anhaften des klebrigen Bandmaterials an der Greifleiste kommen, was beim Lösen der Greifleiste zu einer ungewünschten Positionierung des abzulegenden Endes des Bandmaterials führen kann.

Bei herkömmlichen Greifvorrichtungen, bei der die Greifleiste um einen Drehpunkt geschwenkt wird, der oberhalb der Arbeitsebene bzw. oberhalb des zugeführten Bandmaterials liegt, treten diese Probleme verstärkt auf. Durch den oben liegenden Drehpunkt wandert beim Schließen ein Kontaktbereich der Greifleiste dem zugeführten Bandmaterial entgegen, wodurch vermehrt Spannungen in das Bandmaterial eingebracht werden, die sich negativ auf ein Ablösen des Bandmaterials von der Greifleiste auswirken. Das Ende des Bandmaterials löst sich häufig unkontrolliert von der Greifleiste, wodurch der mit Hilfe der Schere geschnittene Streifen seine exakte Position verliert, was in nachfolgenden Arbeitsschritten wie beispielsweise dem Zusammenfügen der geschnittenen Streifen mittels Spleißen nachteilig ist. Bei einer ungenauen Ablage der Streifen ist es kaum möglich, Endlosstreifen mit exaktem Kantenverlauf zu erhalten.

Aus US 4,383,683 ist eine Vorrichtung zum Abnehmen einer Lage eines mehrlagigen Stapel beschrieben, die eine Greifvorrichtung aufweist, mit der eine Kante der Lage ergriffen werden kann, um die Lage herauszuziehen. Dabei weist die Greifvorrichtung einen unterhalb einer Arbeitsebene liegenden Drehpunkt auf.

Der Erfindung liegt nun die Aufgabe zugrunde, die Nachteile des Standes der Technik zu beseitigen und die Handhabung von klebrigem Bandmaterial, insbesondere von Cordmaterial mit Textil- bzw. Stahldrähten, zu verbessern. Insbesondere sollen durch die Greifvorrichtung nur geringe Spannungen in das Bandmaterial eingebracht werden und ein leichtes Lösen möglich sein. Eine Ablage des Bandmaterials soll mit hoher Lagegenauigkeit möglich sein. Ferner soll die Greifvorrichtung eine möglichst flache Bauform aufweisen, um beispielsweise durch eine geöffnete Messeröffnung hindurchgreifen zu können.

Gelöst wird diese Aufgabe durch eine Greifvorrichtung mit den Merkmalen des Anspruchs 1. Ausgestaltungen sind Gegenstand der Ansprüche 2 bis 8.

Bei einer Greifvorrichtung, die insbesondere für ein Rückzugssystem einer Maschine zur Verarbeitung von klebrigen Bandmaterial geeignet ist, und die eine Greifleiste und ein Greifblech aufweist, zwischen denen ein Spalt ausgebildet ist, wobei die Greifleiste gegenüber dem feststehenden Greifblech um einen Drehpunkt verschwenkbar ist, ist erfindungsgemäß vorgesehen, dass der Drehpunkt der Greifleiste unterhalb einer Arbeitsebene angeordnet ist, die durch eine der Greifleiste zugewandte Oberseite des Greifblechs definiert ist.

Der Drehpunkt der Greifleiste ist also von einem Bereich, der im betriebsbereiten Zustand der Greifvorrichtung oberhalb der Arbeitsebene liegt, in einen Bereich unterhalb der Arbeitsebene verschoben worden. Beim Öffnen der Greifvorrichtung bewegt sich die Greifleiste beziehungsweise deren Greifbereich sofort vom Bandmaterial weg, wodurch ein kontrolliertes Ablösen erfolgt. Dieses Ablösen wird dabei durch die Spannungen im Bandmaterial unterstützt, die die gleiche Kraftrichtung haben, sodass das Material exakt abgelegt werden kann. Der Greifbereich der Greifleiste kann dabei derartig ausgebildet sein, dass er im geschlossenen Zustand der Greifvorrichtung parallel zur Oberseite des Greifblechs verläuft. Im geschlossenen Zustand kann so ein flächiges Klemmen des Bandmaterials erfolgen, sodass dies sicher gehalten und gezogen werden kann, wobei eine Materialbelastung gering gehalten wird.

Die Greifleiste ist in einer insbesondere teilkreisförmigen Kulissenführung gelagert. Eine Kulissenführung ermöglicht die Aufnahme relativ großer Kräfte und eine genaue Vorgabe der gewünschten Bewegungsbahn. Die Greifleiste kann so relativ steif gelagert werden, sodass nicht nur relativ hohe Zug- und Haltekräfte übertragbar sind, sondern auch ein Ablegen des Bandmaterials mit hoher Genauigkeit erfolgen kann. Dabei ermöglicht die Kulissenführung die Anordnung des Drehpunktes unterhalb der Arbeitsebene, ohne dort für die Drehführung erforderliche Elemente anordnen zu müssen, die nachgelagerten Anlagenkomponente hindernd im Weg wären. Darüber hinaus erlaubt die oberhalb der Arbeitsebene angeordnete Kulissenführung in Kombination mit einem unterhalb der Arbeitsebene angeordneten Drehpunkt eine gute Unterstützung und Lagegenauigkeit.

In einer bevorzugten Ausgestaltung weist die Kulissenführung zwei Nuten auf, die parallel zueinander verlaufen, wobei sie insbesondere an einander gegenüberliegenden Seiten eines Lagerblocks ausgebildet sind. Dies stellt einen relativ stabilen, steifen Aufbau dar, wobei durch die parallele Führung der Greifleiste in zwei Nuten eine Verbindung beziehungsweise ein Durchbiegen der Greifleiste beim Aufbringen der Klemmkräfte gering gehalten wird. Die Nuten sind dabei insbesondere teilkreisförmig ausgebildet und zu voneinander abgewandten Seiten hin offen.

Vorzugsweise ist die Greifleiste dabei an Seitenwangen befestigt, die jeweils über mindestens einen Kulissenstein, insbesondere über mehrere Kulissensteine, in einer der Nuten geführt sind. Die Kulissensteine können dabei beispielsweise über Schraubbolzen an zueinander zugewandten Innenseiten der Seitenwangen befestigt sein. Eine besonders geringe Reibung ergibt sich dann beispielsweise durch eine drehbare Lagerung der Kulissensteine auf diesen Bolzen, sodass sie in den Nuten abrollen können. Über die Kulissensteine lassen sich auch größere Kräfte problemlos übertragen und eine sehr genaue Führung der Greifleiste erreichen. Diese kann mit Hilfe der Seitenwangen dann problemlos vom Lagerblock beabstandet sein, um ausreichend Raum zum Durchführen der Schwenkbewegung zu erhalten.

Zum besonders einfachen Einbringen der benötigten Antriebskräfte können zueinander benachbarte Seitenwangen über einen Gelenkkopf miteinander verbunden sein, an dem ein Krafteinleitungspunkt für einen Antrieb zum Schwenken der Greifleiste ausgebildet ist. Dieser Krafteinleitungspunkt liegt dabei bevorzugterweise oberhalb der Kulissenführung, wobei als Antrieb beispielsweise ein Linearantrieb vorgesehen werden kann. Über diesen Antrieb wird dann eine Druck- oder Zugkraft auf den Gelenkkopf ausgeübt, was zu einem Verschwenken des Gelenkkopfes mit den Seitenwangen und der Greifleiste führt, wobei die Schwenkbewegung durch die Ausgestaltung der Kulissenführung vorgegeben ist.

Der Antrieb kann beispielsweise als pneumatischer Antrieb in Form einer Zylindereinheit mit einem Zylinder und einem Zylinderstößel ausgebildet sein. Dies stellt eine relativ einfache Ausgestaltung eines Linearantriebs dar, der relativ schnelle Stellbewegungen mit ausreichend hohen Kräften ermöglicht. Dabei greift bevorzugterweise die Zylindereinheit am Gelenkkopf an und ist insbesondere im Wesentlichen parallel zur Arbeitsebene angeordnet. Wenn die Bewegungsrichtung des Antriebs parallel zur Arbeitsebene verläuft, kann die Greifvorrichtung mit einer relativ geringen Bauhöhe auskommen.

Ein relativ steifer und einfacher Aufbau der Greifvorrichtung kann dadurch erhalten werden, dass die Zylindereinheit mit einem von der Greifleiste abgewandten Ende an einer Basis der Greifvorrichtung befestigt ist, an der auch das Greifblech und der Lagerblock befestigt sind. Dabei sind das Greifblech und der Lagerblock insbesondere an gegenüberliegenden Seiten der Basis angeordnet, also der Lagerblock an einer Oberseite und das Greifblech an einer Unterseite. Die Basis kann dabei aus einem Metallblech hergestellt werden, was eine kostengünstige Fertigung ermöglicht.

Dabei ist besonders bevorzugt, dass die Basis einen Flansch aufweist, an dem die Zylindereinheit angreift, wobei gegebenenfalls der Flansch mit Verstärkungselementen gegenüber der Basis versteift ist. Der Flansch wird beispielsweise durch Umbiegen eines Endes der aus einem Metallblech hergestellten Basis erhalten, wobei das Ende der Basis beispielsweise um 90° nach oben gebogen wird. Über den Lagerblock und die Basis ergibt sich dann durch die Zylindereinheit ein geschlossener Kraftfluss. Zur Versteifung des Flansches kann dieser mit Verstärkungselementen gegenüber der Basis versteift sein, die beispielsweise als Metallbleche ausgebildet sind und sowohl mit dem Flansch als auch mit der eigentlichen Basis verschweißt sind. Eine Verformung des Flansches ist dann auch bei größeren Stellkräften nicht zu befürchten.

Zum einfachen Befestigen der Greifvorrichtung an einem Rückzug, beispielsweise an einem Verfahrrahmen des Rückzugs, kann der Flansch an einer von der Greifleiste abgewandten Seite eine Verbindungsgeometrie zum Befestigen am Rückzug aufweisen. Der Flansch besitzt damit eine Doppelfunktion. Zum einen dient er zur Befestigung der Zylindereinheit, zum anderen zum Anbringen der Greifvorrichtung an einen Rückzug oder an ähnlichen Elementen. Damit ergibt sich ein sehr einfacher Aufbau.

Ein leichteres Ablösen des klebrigen Bandmaterials und damit eine höhere Lagegenauigkeit des abgelegten Bandmaterials wird insbesondere dadurch erreicht, dass die Greifleiste und gegebenenfalls das Greifblech mit einer Antihaftbeschichtung versehen ist. Dabei ist es ausreichend, nur die Bereiche der Greifleiste und gegebenenfalls des Greifblechs mit einer Antihaftbeschichtung zu versehen, die in Kontakt mit dem Bandmaterial gelangen. Es ist aber auch möglich, die Greifleiste und gegebenenfalls das Greifblech vollständig mit einer Antihaftbeschichtung zu versehen.

Bei einem Rückzugssystem einer Cordschneidanlage zum Bearbeiten von klebrigen Bandmaterial, insbesondere von Cordmaterial, das eine Greifvorrichtung mit den Merkmalen nach einem der Ansprüche 1 bis 8 aufweist, kann vorgesehen werden, dass die Greifvorrichtung an einem Verfahrrahmen befestigt ist, der gegenüber einem Hauptrahmen des Rückzugssystems in einer parallel zur Arbeitsebene verlaufenden Rückzugsrichtung bewegbar ist. Die Greifvorrichtung ist damit also sozusagen in das Rückzugssystem der Cordschneidanlage integriert. Je nach Ausgestaltung der Cordschneidanlage ist es dabei ausreichend, die Greifvorrichtung mit dem Verfahrrahmen senkrecht zur Greifleiste beziehungsweise zu einer Messeröffnung bewegen zu können, oder aber auch in einem dazu abweichenden Winkel. Um parallel zur Arbeitsebene nahezu beliebige Rückzugsrichtungen zu ermöglichen, kann der Verfahrrahmen beispielsweise in Art eines X-Y-Tisches mit dem Hauptrahmen des Rückzugssystems verbunden sein.

Um auch breiteres Bandmaterial sicher greifen zu können, können dabei mehrere Greifvorrichtungen nebeneinander angeordnet werden, wobei die Greifleiste und/oder das Greifblech einteilig oder ebenfalls mehrteilig ausgeführt werden können. Beispielsweise können mehrere Kulissenführungen beziehungsweise Lagerblöcke auf einer gemeinsamen Basis angeordnet werden, wobei die Greifleiste über eine entsprechende Anzahl an Seitenwangen in den Kulissenführungen schwenkbar geführt wird. Dadurch lassen sich auch große Breiten realisieren, ohne dass eine ungewünschte Durchbiegung der Greifleiste erfolgt, die zum Einbringen von ungewünschten Spannungen in das Bandmaterial und zu einem ungenauen Ablegen führen würde.

In einer bevorzugten Ausgestaltung wird eine Bewegung des Verfahrrahmens in einer Richtung senkrecht zur Greifleiste mit Hilfe von ersten Linearantrieben, insbesondere Spindeltrieben, erzeugt, die an gegenüberliegenden Seiten des Hauptrahmens gelagert sind. Mit Hilfe von beispielsweise zwei derartigen Linearantrieben, die beispielsweise in Y-Richtung wirken, lässt sich ein relativ genaues paralleles Verschieben der Greifleiste realisieren. Durch eine Anordnung der ersten Linearantriebe an gegenüberliegenden Seiten des Hauptrahmens greifen diese sozusagen an gegenüberliegenden Enden des Verfahrrahmens beziehungsweise der Greifleiste an und weisen dementsprechend einen großen Abstand zueinander auf, sodass eine ungewünschte Winkeländerung der Greifleiste bei Aktivierung der Linearantriebe kaum zu befürchten ist.

Für das Erzeugen einer variablen Rückzugsrichtung parallel zur Arbeitsebene ist bevorzugterweise eine Bewegung des Verfahrrahmens parallel zur Greifleiste über mindestens einen zweiten Linearantrieb erzeugbar, der an einem Verbindungselement gelagert ist, das von den ersten Linearantrieben senkrecht zur Greifleiste bewegbar ist. Die Bewegung der ersten Linearantriebe überlagert sich dann mit der Bewegung des zweiten Linearantriebs, sodass der Verfahrrahmen mit der Greifvorrichtung parallel zur Arbeitsebene in beliebigen Rückzugsrichtungen verfahren werden kann. Dadurch kann das Bandmaterial beispielsweise in einem Winkel ungleich 90° zu seiner Kante geschnitten werden und im entsprechenden Winkel durch die Greifvorrichtung mit dem Rückzugssystem gezogen werden. Das Verbindungselement ist dabei beispielsweise in Linearführungen am Hauptrahmen gelagert, während der Verfahrrahmen wiederum über Linearführungen am Verbindungselement gelagert ist. Das Verbindungselement kann dabei auch mehrteilig ausgebildet sein. Damit wird ein angetriebener X-Y-Tisch erhalten, der einen genauen Rückzug der Greifvorrichtung und damit ein Ziehen beziehungsweise Fördern des Bandmaterials in nahezu jeder gewünschten Rückzugsrichtung ermöglicht.

Dabei ist besonders bevorzugt, dass einer der ersten Linearantriebe mit einer Versatzvorrichtung in einer Richtung senkrecht zur Greifleiste verlagerbar ist. Diese Versatzvorrichtung dient dabei als Ausgleichssystem, mit dessen Hilfe durch Verlagerung der Position eines der ersten Linearantriebe parallel zu dessen Bewegungsrichtung eine Winkelverstellung des Verfahrrahmens mit der Greifvorrichtung erfolgt. Dadurch ist es beispielsweise möglich, ein beim Schneiden des Bandmaterials erfolgendes Wegdrücken, das einen Kantenverlauf der geschnittenen Streifen negativ beeinflusst, auszugleichen. Insbesondere ist es dadurch möglich, Streifen mit parallel verlaufenden Kanten zu erzeugen und so eine fortlaufende Kante des Bandmaterials mit hoher Geradlinigkeit herzustellen.

Mit Hilfe der Versatzvorrichtung kann der geschnittene Streifen beziehungsweise das Ende des Bandmaterials mit einem minimalen Versatz abgelegt werden, wobei dieser Versatz etwa dem Verdrücken beim Schneiden entspricht. Über eine übergeordnete Steuerung kann dabei dieser Versatz vorgegeben werden.

Bevorzugterweise weist die Versatzvorrichtung eine Verstelleinheit und einen senkrecht zur Greifleiste linear beweglich am Hauptrahmen gelagerten Schlitten auf, an dem der erste Linearantrieb befestigt ist. Der Schlitten ist dabei beispielsweise über Linearführungen am Hauptrahmen gelagert, sodass insgesamt eine relativ steife Anordnung erhalten wird. Die Verstelleinheit liegt zwischen Schlitten und Hauptrahmen und insbesondere auf einer Bewegungsachse des Linearantriebs, sodass der Kraftfluss direkt durch die Verstelleinheit geleitet wird. Die Bewegungsrichtung der Verstelleinheit und des Linearantriebes verlaufen parallel zueinander und können gegebenenfalls miteinander fluchten.

In einer bevorzugten Ausführungsform ist die Verstelleinheit als pneumatische Stelleinheit ausgebildet und umfasst einen Zylinder und einen Zylinderstößel, wobei die Verstelleinheit im Bereich einer Stirnfläche des Linearantriebs am Schlitten angreift. Über eine derartige pneumatische Stelleinheit lassen sich auch bei einer geringen Baugröße ausreichend große Stellkräfte aufbringen. Durch die Anordnung der Verstelleinheit im Bereich einer Stirnfläche des Linearantriebs kann diese auf der Bewegungsachse des Linearantriebs angeordnet werden, sodass die vom Linearantrieb aufgebrachten Kräfte durch die Verstelleinheit auf den Hauptrahmen übertragen werden können.

Bevorzugterweise weist die Verstelleinheit einen insbesondere verstellbaren Anschlag auf. Dieser Anschlag dient zum einen als Begrenzung für die Bewegung des Schlittens, zum anderen aber auch zu einer definierten Position des Schlittens, wenn dieser am Anschlag anliegt. Durch eine verstellbare Ausgestaltung des Anschlags kann dabei eine individuelle Anpassung erfolgen. Beispielsweise ist es dadurch möglich, eine feste Winkelabweichung auszugleichen.

Ein besonders geringer Bauraumbedarf ergibt sich dadurch, dass der Anschlag eine Bohrung aufweist, durch die der Zylinderstößel zum Schlitten geführt ist, wobei der Anschlag insbesondere mit der Verstelleinheit verschraubt ist. Eine Verschraubung ermöglicht eine einfache Verstellung des Anschlags und damit eine Anpassung der Verstelleinheit. Durch einfaches Ein- bzw. Ausschrauben kann der Anschlag so verlagert werden.

Dabei ist besonders bevorzugt, dass die Verstelleinheit zwischen Greifleiste und Linearantrieb angeordnet ist, wobei der Schlitten durch die Verstelleinheit gegen den Anschlag ziehbar ist und zum Ausführen einer Ausgleichsbewegung vom Anschlag weg drückbar ist. Beim Ziehen des Schlittens beziehungsweise des ersten Linearantriebes zur Greifleiste hin, wird der Kraftfluss dann gezielt in den Anschlag geleitet. Dies ist die Grundstellung, in der der erste Linearantrieb und damit der Verfahrrahmen beziehungsweise die Greifvorrichtung eine definierte Lage einnimmt. Zum Ausgleichen eines Winkelversatzes wird dann während der Rückzugsbewegung oder nach Beendigung der Rückzugsbewegung der erste Linearantrieb mit dem Schlitten durch die Verstelleinheit weggedrückt. Dabei kann über eine übergeordnete Steuerung vorgegeben werden, ob und inwieweit ein Versatz ausgeglichen werden soll. Durch diese Verstellung wird das geklemmte Ende des Bandmaterials auf der Anschnittseite vor dem Ablegen beispielsweise auf ein Folgeband leicht herumgezogen. Damit wird ein Materialverzug, der durch Verdrücken beim Schneiden auftreten kann, ausgeglichen und eine hohe Parallelität der geschnittenen Kanten erzielt.

In einer bevorzugten Ausgestaltung ist der Hauptrahmen freistehend ausgebildet, wobei der Hauptrahmen insbesondere über Rollen beweglich ist. Der Hauptrahmen und damit das gesamte Rückzugssystem kann relativ einfach mit verschiedenen Elementen der Cordschneidanlage kombiniert werden. Insbesondere ergibt sich dabei auch eine einfache Wartung, indem der Hauptrahmen und das Rückzugssystem über die Rollen einfach aus seiner Arbeitsposition hinaus bewegt werden können, was einen leichteren Zugriff ermöglicht.

In einer alternativen Ausgestaltung ist der Hauptrahmen an einem Gestell einer Schere festgelegt, die in Zuführrichtung des Bandmaterials vor dem Rückzugssystem angeordnet ist. Das Rückzugssystem ist damit sozusagen in eine Schere integriert. Dies ergibt einen einfachen, kostengünstigen Aufbau, da der Hauptrahmen dann beispielsweise am Gestell der Schere abgestützt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Figur 1: eine Seitenansicht eines Rückzugssystems mit Greifvorrichtung,
- Figur 2: eine Draufsicht auf das Rückzugssystem gemäß Figur 1,
- Figur 3: eine Seitenansicht einer geöffneten Greifvorrichtung,
- Figur 4: die Greifvorrichtung nach Figur 3 im geschlossenen Zustand,
- Figur 5: eine Schnittdarstellung der Greifvorrichtung,
- Figur 6: eine Anordnung der Greifvorrichtung an einer Schere,
- Figur 7: die Anordnung gemäß Figur 6 mit geklemmtem Bandmaterial,
- Figur 8: die Anordnung nach Figur 6 und Figur 7 nach Durchführen einer Rückzugsbewegung der Greifvorrichtung,
- Figur 9a und 9b: Ansichten einer Verstelleinheit,
- Figuren 10 bis 12: Verschiedene Ausgestaltungen eines Rückzugssystems und
- Figur 13: ein typisches Anlagenlayout einer Cordschneidanlage.

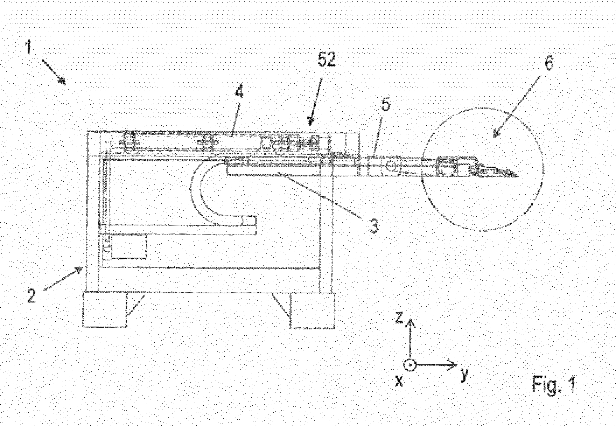

Figur 1 zeigt in schematischer Ansicht ein Rückzugssystem 1 einer Maschine zur Bearbeitung von dünnen, klebrigen Bandmaterial, insbesondere von Cordmaterial mit Textilbeziehungsweise Stahldrähten. Das Rückzugssystem 1 weist einen Hauptrahmen 2 auf, der selbsttragend ausgebildet ist. An diesem Hauptrahmen 2 ist ein Verbindungselement 3 in einer Y-Richtung, also in die Zeichenebene gemäß Figur 1 hinein beziehungsweise heraus, verfahrbar gelagert. Am Verfahrrahmen ist eine Greifvorrichtung 6 befestigt. Zum Bewegen des Verbindungselementes 3 ist ein Linearantrieb 4 vorgesehen, der am Hauptrahmen 2 angeordnet ist. Das Rückzugssystem 1 ermöglicht somit eine relativ beliebige Rückzugsbewegung der Greifvorrichtung 6 mit dem Verfahrrahmen 5 in einer Arbeitsebene, die senkrecht zur Zeichenebene nach Figur 1 verläuft.

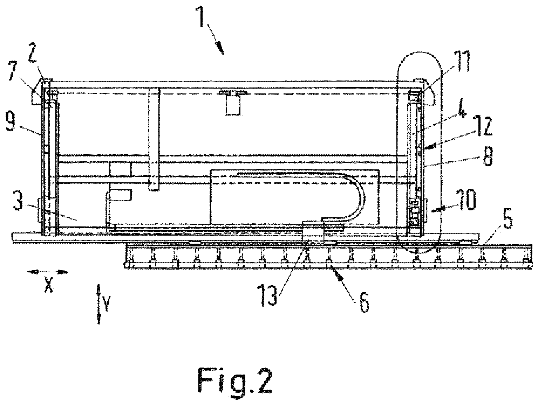

In Figur 2 ist eine Draufsicht auf das Rückzugssystem 1 mit der Greifvorrichtung 6 dargestellt. Die Zeichenebene liegt dabei parallel zur Arbeitsebene. Zur Verstellung des Verfahrrahmens 5 beziehungsweise der Greifvorrichtung 6 in einer Richtung senkrecht zur Greifvorrichtung 6, also in Y-Richtung, sind zwei erste Linearantriebe 4, 7 vorgesehen, die an gegenüberliegenden Seiten 8, 9 des Hauptrahmens 2 angeordnet sind. Fluchtend mit dem ersten Linearantrieb 4 ist eine Verstelleinheit 10 am Hauptrahmen 2 angeordnet, die den ersten Linearantrieb 4 senkrecht zur Greifvorrichtung 6 verlagern kann. Dafür ist der erste Linearantrieb 4 in einen Schlitten 11, der gegenüber dem Hauptrahmen 2 in Linearführungen 12 gelagert ist, angeordnet.

Zur Bewegung des Verfahrrahmens 5 parallel zur Greifvorrichtung 6, also in X-Richtung, ist ein zweiter Linearantrieb 13 vorgesehen, der am Verbindungselement 3 befestigt ist. Der Verfahrrahmen 5 ist also in X-Richtung bewegbar auf dem Verbindungselement 3 gelagert, das gegenüber dem Hauptrahmen 2 in Y-Richtung verlagerbar ist. Die Greifvorrichtung 6 kann damit in nahezu beliebiger Rückzugsrichtung mit Hilfe der Linearantriebe 4, 7, 13 in bzw. parallel zur Arbeitsebene bewegt werden.

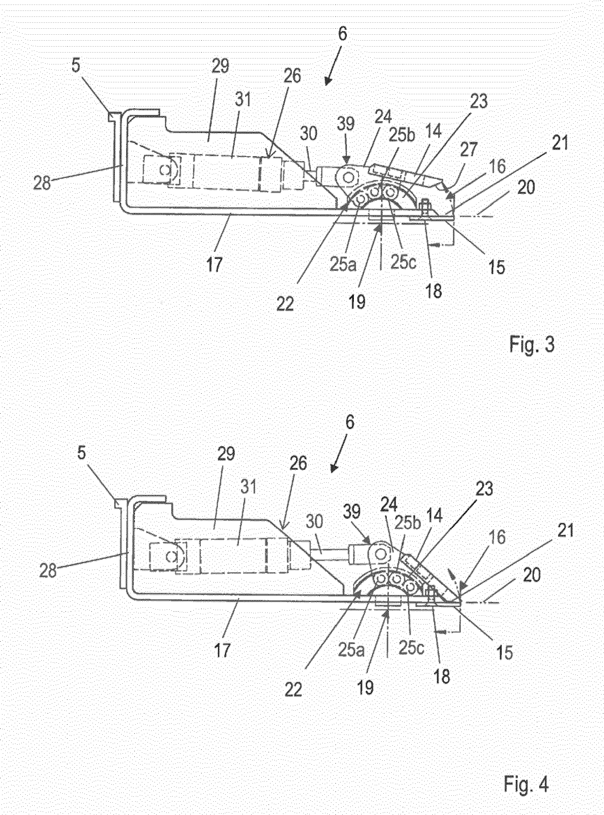

Die nähere Ausgestaltung der Greifvorrichtung 6 ist in Figur 3 dargestellt. Die Greifvorrichtung 6 weist eine Greifleiste 14 und ein Greifblech 15 auf, zwischen denen ein Greifspalt 16 ausgebildet ist. Das Greifblech 15 ist dabei an einer Basis 17 der Greifvorrichtung 6 mittels Schrauben 18 festgelegt, also unbeweglich gehalten. Demgegenüber ist die Greifleiste 14 schwenkbar gelagert, wobei ein Drehpunkt 19 unterhalb einer Arbeitsebene 20 angeordnet ist, die durch eine der Greifleiste 14 zugewandte Oberfläche 21 des Greifblechs 15 definiert ist. Auf dieser Arbeitsebene 20 wird eine Unterseite des Bandmaterials geführt.

Die Greifleiste 14 befindet sich oberhalb der Basis 17 beziehungsweise oberhalb der Arbeitsebene 20, sodass die Greifleiste 14 und der Drehpunkt 19 auf unterschiedlichen Seiten der Arbeitsebene 20 angeordnet sind.

Die Greifleiste 14 ist in einer Kulissenführung 22 geführt, die eine teilkreisförmige Nut 23 aufweist. Dabei ist die Greifleiste 14 an einer Seitenwange 24 befestigt, die über drei Kulissensteine 25a, 25b, 25c in der Nut 23 gelagert ist. Über eine Zylindereinheit 26, die im Wesentlichen parallel zur Basis 17 beziehungsweise zur Arbeitsebene 20 angeordnet ist, kann in die Seitenwange 24 und damit in die Greifleiste 14 eine Kraft eingebracht werden, mit der die Greifleiste 14 gegenüber dem Greifblech 15 verschwenkt wird, sodass der Greifspalt 16 geschlossen beziehungsweise geöffnet wird. Die Bewegung der Greifleiste wird dabei durch die Form der Nut 23 der Kulissenführung 22 vorgegeben und erfolgt bevorzugterweise auf einer Kreisbahn.

Ein Greifbereich 27 der Greifleiste 14 ist derartig ausgebildet, dass er bei geschlossenem Greifspalt 16 parallel zur Oberseite 21 des Greifblechs 15 verläuft. Dadurch kann ein Ende eines Bandmaterials flächig geklemmt beziehungsweise ergriffen werden.

Ein Ende der Basis 17 ist zu einem Flansch 28 umgebogen, der zum einen zur Befestigung der Greifvorrichtung 6 am Verfahrrahmen 5 dient und zum anderen zur Festlegung der Zylindereinheit 26. Der Flansch 28 ist dabei über ein Verstärkungselement 29, das als Metallblech ausgebildet ist, gegenüber der übrigen Basis 10 versteift. Dafür kann das Verstärkungselement beispielsweise mit der Basis 17 und dem Flansch 28 verschweißt sein.

Während bei der Darstellung gemäß Figur 3 der Greifspalt 16 der Greifvorrichtung 6 geöffnet ist, ist der Greifspalt 16 bei der Darstellung gemäß Figur 4 geschlossen. Ein Zylinderstößel 30 der Zylindereinheit 26 ist dafür aus einem Zylinder 31 pneumatisch herausgefahren worden. Die Greifleiste 14 ist dementsprechend auf einer Kreisbahn verschwenkt worden, sodass der Greifspalt 16 geschlossen ist. Zwischen Greifleiste 14 und Greifblech 15 kann so ein Ende des Bandmaterials klemmend gefasst werden. Durch eine drehbare Lagerung des feststehenden Endes des Zylinders 31 am Flansch 28 kann dabei ein Drehversatz, der durch die Kulissenführung 22 bedingt ist, ausgeglichen werden. Eine Biegebelastung der Zylindereinheit 26, die beispielsweise zu Undichtigkeiten führen könnte, wird so gering gehalten.

Ein Krafteinleitungspunkt 39, an dem der Zylinderstößel 30 angreift, um die Seitenwange 24 mit der Greifleiste 14 zu verschwenken, ist auf einer von der Basis 17 beziehungsweise der Arbeitsebene 20 abgewandten Seite der Kulissenführung 22 angeordnet, sodass sich günstige Hebelverhältnisse ergeben.

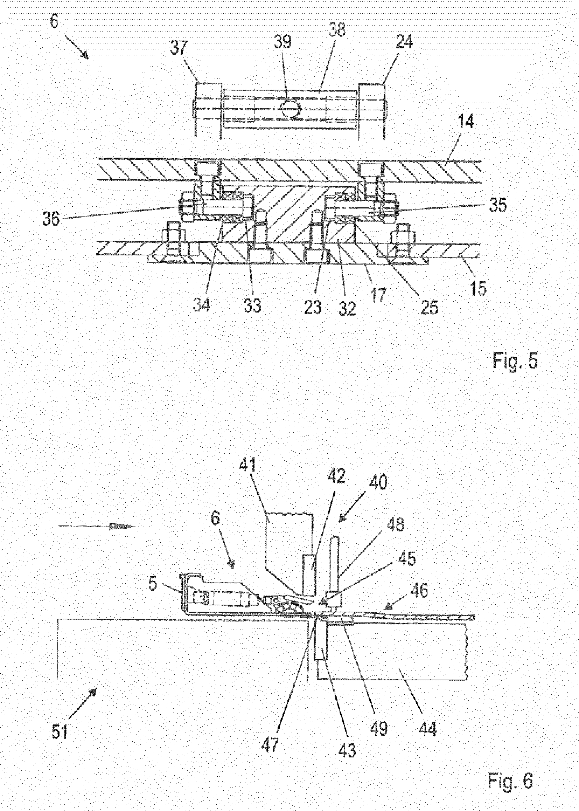

In Figur 5 ist eine Schnittdarstellung der Greifvorrichtung 6 dargestellt. Die Kulissenführung 22 ist in einem Lagerblock 32 ausgebildet, der dafür neben der Nut 23 eine dazu spiegelbildlich ausgebildete Nut 33 aufweist, wobei die Nuten 23, 33 an gegenüberliegenden Seiten des Lagerblocks 32 ausgebildet sind. In den Nuten 23, 33 geführte Kulissensteine 25, 34 sind über Schraubbolzen 35, 36 an den Seitenwangen 24, 37 befestigt. Die Seitenwangen 24, 37 der Greifvorrichtung 6 sind über einen Gelenkkopf 38 miteinander verbunden, in dem der Krafteinleitungspunkt 39, an dem der Zylinderstößel 30 der Zylindereinheit 26 befestigbar ist, ausgebildet ist. Der Gelenkkopf 38 ist dabei in den Seitenwangen 24, 37 drehbar gelagert, um einen durch die Kulissenführung 22 bedingten Drehversatz beim Verschwenken der Greifleiste 14 auszugleichen.

In Figur 6 ist eine mögliche Verwendung der Greifvorrichtung 6 mit dem Rückzugssystem 1 in Verbindung mit einer Schere 40 einer Cordschneidanlage dargestellt. Die Schere 40 weist einen vertikal bewegbaren Messerbalken 41 mit einem Obermesser 42 auf, wobei zwischen dem Obermesser 42 und einem Untermesser 43, das an einem Tisch 44 vertikal unbeweglich befestigt ist, eine Messeröffnung 45 ausgebildet ist. Das Obermesser 42 mit dem Messerbalken 41 ist bei einer derartigen Schere 40 ähnlich wie eine Guillotine gegenüber dem Untermesser 43 mit dem Tisch 44 bewegbar, wobei die Messeröffnung 45 zum Durchführen eines Schnittes in einer Materialbahn 46 geschlossen wird. Vor dem Durchführen des Schnittes wird das Bandmaterial 46 mit Hilfe der Greifvorrichtung 6 beziehungsweise dem Rückzugssystem 1 durch die Messeröffnung 45 hindurchgefördert.

In Figur 6 ist eine Situation dargestellt, bei der nach Abschluss des Schnittvorgangs der abgeschnittene Streifen des Bandmaterials 46 bereits entfernt worden ist. Die Greifvorrichtung 6 ist bis zu einem Ende des Bandmaterials 46 vorgefahren worden und greift durch die Messeröffnung 45. Das Ende 47 des Bandmaterials 46 ist noch zwischen einem Niederhalter 48 und einem Gegenhalter 49 klemmend gehalten, wobei der Gegenhalter 49 und der Niederhalter 48 leicht vertikal nach oben verfahren sind, um ein Ergreifen des Endes 47 mittels der Greifvorrichtung 6 zu erleichtern.

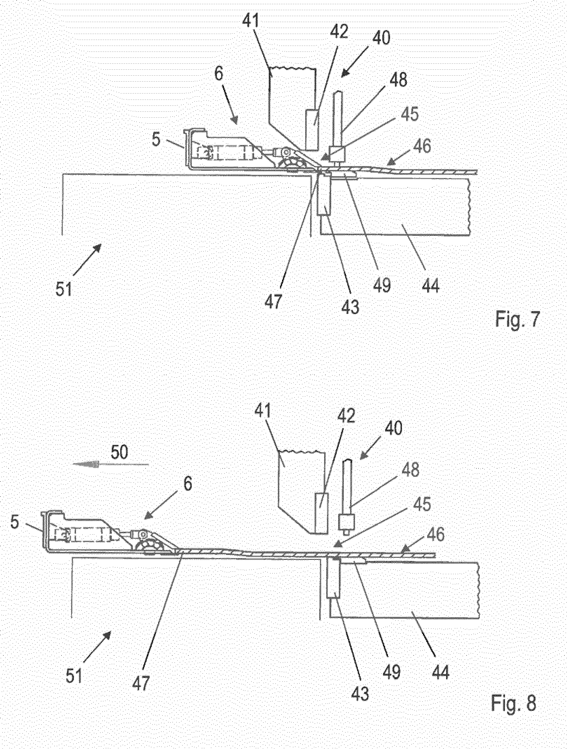

Das Greifblech 15 ist dementsprechend bereits unter das Ende 47 des Bandmaterials 46 bewegt worden, sodass nach Schließen des Greifspaltes 16 das Ende 47 zwischen der Greifleiste 14 und dem Greifblech 15 klemmend gehalten wird. Dies ist in Figur 7 dargestellt.

Figur 8 zeigt nun eine Situation, in der die Greifvorrichtung 6 in Rückzugsrichtung 50 von der Messeröffnung 45 wegbewegt worden ist, wodurch das Bandmaterial 46 um eine gewünschte Streifenbreite durch die Messeröffnung 45 gezogen wurde. Dafür war bereits vor dem Durchführen der Rückzugsbewegung der Greifvorrichtung 6 der Niederhalter 48 und der Gegenhalter 49 vertikal auseinander gefahren worden, um das Ende 47 des Bandmaterials 46 freizugeben. Die Greifvorrichtung 6 kann nun das Ende 47 des Bandmaterials 46 freigeben. Es kann aber auch gewünscht sein, das Ende 47 solange in der Greifvorrichtung 6 zu halten, bis ein Schnittvorgang mit Hilfe der Schere 40 durchgeführt wurde, um den abgeschnittenen Streifen des Bandmaterials 46 genau auf einem Hochhalter 51 ablegen zu können.

Der Hochhalter 51 kann eine Fördereinrichtung aufweisen, beispielsweise ein Förderband, um den abgeschnittenen Streifen abzutransportieren. Dieser Abtransport erfolgt dann häufig in einem Winkel, beispielsweise senkrecht, zur bisherigen Zuführrichtung des Bandmaterials, bei der Darstellung der Figur 8 also aus der Zeichenebene heraus beziehungsweise in die Zeichenebene hinein. Dabei erfolgt eine Förderung der abgeschnittenen Streifen zu einer Spleißeinrichtung, in der an die Schnittkante angrenzende Seiten der abgeschnittenen Streifen miteinander verspleißt werden, wobei entweder ein Stumpfspleißer oder ein Überlappspleißer eingesetzt wird.

Um auch größere Breiten an Bandmaterial mit Hilfe der Greifvorrichtung 6 sicher ergreifen zu können und insbesondere faltenfrei ziehen beziehungsweise fördern zu können, können mehrere Greifvorrichtungen 6 nebeneinander angeordnet werden. Dies ist beispielsweise in Figur 2 erkennbar, wobei eine Vielzahl von Kulissenführungen 22 beziehungsweise Lagerblöcken 32 nebeneinander angeordnet sind und jeweils mehreren Lagerblöcken 32 eine Greifleiste 14 zugeordnet ist. Dabei sind auch mehrere Greifleisten 14 nebeneinander angeordnet, um die gewünschte Breite von beispielsweise 2 Metern oder mehr zu erreichen. Bei dieser Ausgestaltung sind aber alle Kulissenführungen beziehungsweise Lagerblöcke auf einer gemeinsamen Basis angeordnet, die die gegenseitige Positionierung sicherstellt.

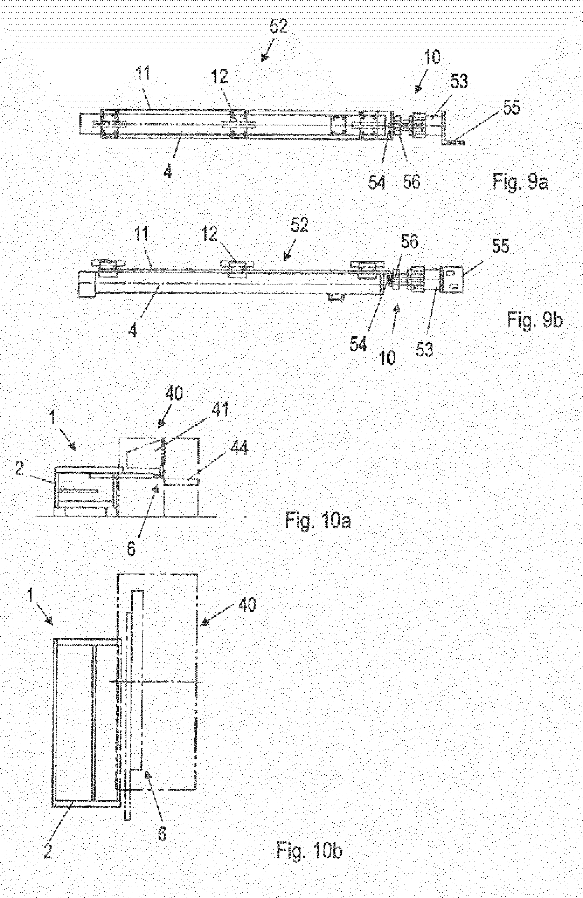

In den Figuren 9a und 9b ist die Verstelleinheit 10 dargestellt, wobei in Figur 9a eine Seitenansicht und in Figur 9b eine Draufsicht auf die Verstelleinheit 10 abgebildet ist. Die Verstelleinheit 10 bildet dabei mit dem Schlitten 11 eine Versatzvorrichtung 52, mit der der erste Linearantrieb 4 gegenüber dem Hauptrahmen 2 parallel zu seiner Bewegungsrichtung verlagert werden kann. Als Verstellweg kann dabei beispielsweise eine Distanz von 0,5 bis 5 mm vorgesehen werden.

Die Verstelleinheit 10 umfasst einen Zylinder 53 und einen Zylinderstößel 54, wobei der Zylinder 53 über einen Flansch 55 am Hauptrahmen 2 festgelegt werden kann. Beispielsweise wird dies durch eine Schraubverbindung realisiert.

Die Verstelleinheit 10 weist ferner einen Anschlag 56 auf, der als Hohlschraube ausgebildet ist und durch den der Zylinderstößel 54 hindurchgeführt ist. Der Zylinderstößel 54 ist dabei an einer Stirnseite 57 des Schlittens festgelegt, die durch ein hochgebogenes Ende des Schlittens 11 gebildet ist. Über den Zylinderstößel 54 kann somit der Schlitten 11 beziehungsweise der erste Linearantrieb gegenüber dem Hauptrahmen in Y-Richtung verschoben werden, wobei er entweder vom Anschlag 56 weggedrückt oder gegen diesen Anschlag 56 gezogen wird. Die Verstelleinheit 10 ist dabei im Wesentlichen fluchtend mit dem ersten Linearantrieb 4 angeordnet, sodass auch die jeweiligen Bewegungsrichtungen parallel zueinander verlaufen bzw. im Wesentlichen miteinander fluchten. Dadurch ergibt sich eine gute Verteilung des Kraftflusses.

Während der eigentlichen Rückzugsbewegung wird der Schlitten 11 gegen den Anschlag 56 gezogen. Die während der Rückzugsbewegung auftretenden Kräfte werden dann direkt vom Anschlag 56 aufgenommen und in den Hauptrahmen des Rückzugssystems weitergeleitet. Falls ein Ausgleich eines Verzugs mit Hilfe der Versatzvorrichtung 52 erfolgen soll, wird der erste Linearantrieb 4 mit dem Schlitten 11 durch die Verstelleinheit 10 weggedrückt, sodass das in der Greifvorrichtung 6 geklemmte Bandmaterial auf der Anschnittseite vor dem Ablegen auf das Folgeband leicht herumgezogen wird. Diese Ausgleichsbewegung ist dabei über eine übergeordnete Steuerung steuerbar.

Figur 10 a und 10 b zeigen eine Ausgestaltung des Rückzugssystems 1 mit der Textilschere 40, bei der der Hauptrahmen 2 als eigenständige Einheit ausgebildet ist, das Rückzugssystem 1 also vollständig unabhängig von der Schere 40 ist.

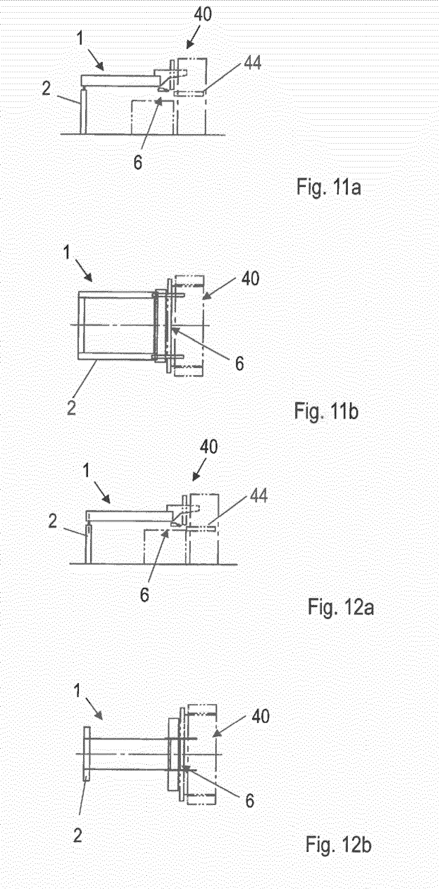

Im Unterschied dazu ist bei der Ausführungsform gemäß der Figuren 11a und 11b der Hauptrahmens 2 des Rückzugssystems 1 in ein Gestell der Schere 40 integriert. Diese Ausgestaltung hat den Vorteil, dass sie insgesamt mit weniger Bauteilen auskommt und damit mit geringerem Aufwand und somit kostengünstiger herstellbar ist.

Die Figuren 12a und 12b zeigen eine ähnliche Ausgestaltung, also eine Kombination des Rückzugssystems mit der Schere, wobei die Greifvorrichtung jedoch nicht in der gesamten Arbeitsebene bewegbar ist, sondern nur in einer Richtung senkrecht zur Messeröffnung beziehungsweise zur Greifleiste. Das Rückzugssystem weist dementsprechend einen vereinfachten Aufbau auf, da es nur Linearantriebe für eine Bewegung in Y-Richtung benötigt.

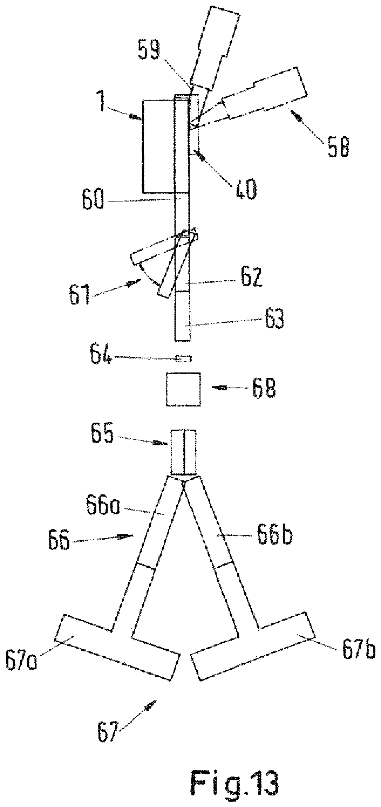

In Figur 13 ist ein typisches Anlagenlayout einer Cordschneidanlage schematisch in Draufsicht dargestellt, in dem das Rückzugssystem 1 in Kombination mit der Schere 40 eingesetzt wird. Das Bandmaterial 46 wird dabei von Vorratsrollen in einem Abwickler 58 abgezogen und über der Schere 40 zugeführt. Die mit dem Bandmaterial bewickelten Rollen werden dafür im Abwickler 58 eingehängt und ausgewickelt. Dabei wird das zu verarbeitende Bandmaterial, beispielsweise eine kombinierte Cordbahn, von einer Zwischenlage getrennt, die als Folie, aus Leinen oder ähnlichem hergestellt ist, und die dazu dient, ein Verkleben des üblicherweise gummierten Bandmaterials zu verhindern. Der Abwickler 58 kann dabei als Einfachabwickler ausgebildet sein, bei dem nur eine einzige Rolle eingehängt ist, oder auch als Doppelabwickler mit einem Drehtisch zum Einhängen von mindestens zwei Materialrollen, wobei von einer Rolle das Bandmaterial abgezogen wird, während die andere ausgetauscht werden kann. Anstelle eines Drehtisches kann dabei auch ein Shuttle-Rahmen vorgesehen werden. Die Rolle kann je nach Ausführung direkt im Abwickler aufgehängt werden, oder in einer Kassette angeordnet sein, die in dem Abwickler untergebracht wird. Weitere Ausgestaltungen des Abwicklers sind ebenfalls möglich.

Um verschiedene Schneidwinkel zu realisieren, ist der Abwickler 58 gegenüber der Schere 40 verschwenkbar angeordnet. Dabei ist zwischen Abwickler 58 und Schere 40 ein Tisch 59 vorgesehen, der im Bedarfsfall gemeinsam mit dem Abwickler 58 verschwenkbar ist. Das zu verarbeitende Band wird über diesen Tisch 59 in die Schere 40 gezogen. Um den Anfang eines Bandes einer neuen Rolle zur Schere 40 zu transportieren, ist es bekannt, am Anfang des Tisches 59 oder darüber eine nicht dargestellte Förderrichtung vorzusehen. Diese Fördereinrichtung kann beispielsweise eine angetriebene Förderrolle sein.

Mit Hilfe der Schere 40 werden von dem Bandmaterial 46 Streifen in einer definierten Breite und in einem definierten Winkel abgeschnitten. Alternativ zu einer Schere, die in Form einer Guillotine mit Obermesser und Untermesser aufgebaut ist, können auch andere Typen Verwendung finden. Beispielsweise gibt es Rundmesserscheren mit einem feststehenden Untermesser und einem daran entlangfahrenden Rundmesser sowie Scheren mit einem schnell rotierenden Sägemesser, die ähnlich wie eine Kreissäge aufgebaut sind.

Um nach dem Abschneiden des Streifens den Bandanfang erneut durch die Messeröffnung von der Zuführseite auf die Abtransportseite zu fördern und um die gewünschte Streifenbreite zu ziehen, ist in Zuführrichtung hinter der Messeröffnung bzw. dem Schneidspalt, also auf der Abtransportseite, die Rückzieheinrichtung 1 angeordnet. Eine Ausgestaltung einer Rückzieheinrichtung ist beispielsweise auch in DE 10 113 379 beschrieben.

Anschließend werden die abgeschnittenen Streifen über eine Transporteinrichtung 60 zu einer oder mehreren Spleißeinrichtungen 61 transportiert. Die Transporteinrichtung 60 weist beispielsweise einen einzelnen oder mehrere Bandgurte auf, auf die die geschnittenen Streifen hinter der Schere gelegt werden. Gegebenenfalls kann dabei hinter der Messeröffnung ein nicht dargestellter Hochhalter vorgesehen werden, der mit Hebeelementen zwischen den Bandgurten durchgreifen kann. Mit Hilfe des Hochhalters können die geschnittenen Streifen nach unten bewegt und auf die Bandgurte abgelegt werden.

In der oder den Spleißeinrichtungen 61 werden die Streifen mit ihren an die Schneidkante angrenzenden Kanten wieder miteinander verbunden. Die Spleißeinrichtung 61 ist dabei als Überlappspleißer und/oder als Stumpfspleißer ausgebildet.

Beim Spleißen handelt es sich um ein rein mechanisches Verbinden ohne Zuhilfenahme von Zusatzstoffen, wobei die von der Schere 40 abgeschnittenen Streifen an ihren schmalen Seiten miteinander verbunden werden. Häufig wird dabei ein Überlappspleißer eingesetzt, bei denen die Enden der Streifen überlappend zueinander gelegt werden und durch Druckbeaufschlagung im Überlappspleißer überlappend miteinander verbunden werden. Der Spleißer ist dabei in der Regel verschwenkbar, um die Streifen in verschiedenen Winkeln verarbeiten zu können. Es ist aber auch denkbar, feststehende Spleißer vorzusehen.

Nach erfolgtem Spleiß werden die wieder miteinander verbundenen Streifen mit Hilfe einer Fördereinrichtung 62, die beispielsweise als Transportband ausgebildet ist, abtransportiert.

Die Fördereinrichtung 62 wird dabei schrittweise um jeweils eine Streifenlänge vorwärtsbewegt. Vor dem Abtransport wurde dann in der Schere 40 bereits der nächste Streifen geschnitten.

Im Anschluss an die Fördereinrichtung 62 kann ein optionales Förderband zum Handspleißen angeordnet sein. Damit wird ein manuelles Spleißen ermöglicht. Ein Bediener hat die Möglichkeit, die geschnittenen Streifen manuell zu verbinden. Die Spleißeinrichtung 61 wird dafür außer Funktion gesetzt. Dadurch sind auch Sonderanfertigungen sowie die Bearbeitung von sehr schmalen Streifenbreiten möglich. Auch sind manche Cordmaterialien mit der automatischen Spleißeinrichtung kaum spleißbar. Diese können dann manuell verarbeitet werden.

Die wieder miteinander verbundenen Streifen können über eine optionale Beruhigungsrolle 64 und über eine optionale Reparaturband 65 geführt werden. Das Reparaturband ist beispielsweise ein in die Anlage integriertes Förderband, das das Ausführen von Reparaturen ermöglicht, falls Fehler im erzeugten Band erkannt werden.

Die miteinander verbundenen Streifen, also das erzeugte Band, wird über eine optionale Belegevorrichtung 66 einem Aufwickler 67 zugeführt. In der Belegvorrichtung 66 können weitere Gummistreifen, beispielsweise bis zu 12 Stück, gleichzeitig auf die miteinander verbundenen Streifen aufgelegt werden. Dabei kann auch eine Einfassung von Außenkanten erfolgen, indem beispielsweise ein Gummistreifen an der Außenkante mit Überstand aufgelegt und um die Kante herumgelegt wird. Damit wird ein an der Außenkante freiliegender Cord ummantelt.

Im Aufwickler 67 werden die miteinander verbundenen Streifen wieder auf Spulen aufgewickelt. In der Regel wird dabei eine Zwischenlage, die ein Verkleben der einzelnen Lagen verhindert, mit aufgewickelt. Für den Aufwickler gibt es verschiedenste Ausführungsformen: Der Aufwickler kann beispielsweise als Einfachaufwickler ausgebildet sein, in dem die miteinander verbundenen Streifen manuell abgelenkt und einer neuen Rolle zugeführt werden müssen, es ist aber auch bekannt, vollautomatische Aufwickler vorzusehen, in denen für das Handling keine Bedienereingriffe notwendig sind.

Im Anschluss an die Spleißeinrichtung 61 kann gegebenenfalls, wie hier dargestellt, hinter der optionalen Beruhigungsrolle 64 eine Längsschneideeinrichtung 68 vorgesehen sein, durch die die erzeugte Streifenbahn geführt und dabei beispielsweise in zwei Längsbahnen getrennt wird. Diese beiden Längsbahnen werden dann zwei Aufwicklern 67a, 67b zugeführt. Damit wird ein Ausstoß der Anlage erhöht. In der Längsschneidevorrichtung 68, die auch als Slitter bezeichnet wird, finden in der Regel Rundmesser Verwendung.

Bei der Verwendung einer Längsschneideeinrichtung 68 werden gegebenenfalls mehrere, insbesondere zwei Belegevorrichtungen 66a, 66b benötigt.

In Figur 13 ist nur zur Veranschaulichung ein typisches Anlagenlayout dargestellt. Ein spiegelbildlicher Aufbau ist beispielsweise ebenfalls problemlos möglich, wie auch das Vorsehen zusätzlicher oder das Weglassen einzelner Anlagenelemente.

Durch die erfindungsgemäße Greifvorrichtung, bei der ein Drehpunkt von einer Position oberhalb einer Arbeitsebene auf eine Position unterhalb einer Arbeitsebene verschoben worden ist, werden beim Greifen des Endes eines Bandmaterials, insbesondere eines Cordmaterials, weniger Spannungen in das Bandmaterial eingebracht. Darüber hinaus ist ein einfacheres Lösen der Greifvorrichtung möglich, sodass das Ende des Bandmaterials beziehungsweise abgeschnittene Streifen vom Bandmaterial genauer positioniert werden können. Die Schwenkbewegung der Greifleiste wird dabei über eine Kulissenführung sichergestellt, die eine genaue Bewegung ermöglicht und eine steife Ausgestaltung der Greifvorrichtung gewährleistet. Daher sind auch größere Zug- bzw. Haltekräfte mit Hilfe der Greifvorrichtung erzeugbar.

Das Rückzugssystem ermöglicht gegebenenfalls die gewünschte Ziehbewegung der Greifvorrichtung. Durch die Verwendung orthogonal zueinander wirkender Linearmotoren und Linearführungen kann die Rückzugsbewegung variabel parallel zur Arbeitsebene erfolgen. Somit kann eine einfache Anpassung an unterschiedliche Schneidwinkel, also unterschiedlichen Zuführwinkeln des Bandmaterials zur Schere, erfolgen.

Durch das Vorsehen einer zusätzlichen Versatzvorrichtung im Rückzugssystem ist es möglich, einen Winkelversatz zu erzeugen beziehungsweise auszugleichen. Ein durch ein Schneiden erfolgendes Verdrücken des Bandmaterials kann damit ausgeglichen werden und die Parallelität der geschnittenen Kanten gewährleistet werden.

Die Erfindung ist nicht auf eine der vorbeschriebenen Ausführungsformen beschränkt, sondern in vielfältiger Weise abwandelbar.

### Bezugszeichenliste

- 1: Rückzugssystem
- 2: Hauptrahmen
- 3: Verbindungselement
- 4: erster Linearantrieb
- 5: Verfahrrahmen
- 6: Greifvorrichtung
- 7: erster Linearantrieb
- 8, 9: Gegenüberliegende Seiten
- 10: Verstelleinheit
- 11: Schlitten
- 12: Linearführung
- 13: zweiter Linearantrieb
- 14: Greifleiste
- 15: Greifblech
- 16: Greifspalt
- 17: Basis
- 18: Schrauben
- 19: Drehpunkt
- 20: Arbeitsebene
- 21: Oberseite
- 22: Kulissenführung
- 23: Nut
- 24: Seitenwange
- 25: Kulissensteine
- 26: Zylindereinheit
- 27: Greifbereich
- 28: Flansch
- 29: Verstärkungselement
- 30: Zylinderstößel
- 31: Zylinder
- 32: Lagerblock
- 33: Nut
- 34: Kulissenstein
- 35: Schraubbolzen
- 36: Schraubbolzen
- 37: Seitenwange
- 38: Gelenkkopf
- 39: Krafteinleitungspunkt
- 40: Schere
- 41: Messerbalken
- 42: Obermesser
- 43: Untermesser
- 44: Tisch
- 45: Messeröffnung
- 46: Bandmaterial
- 47: Ende
- 48: Niederhalter
- 49: Gegenhalter
- 50: Rückzugseinrichtung
- 51: Hochhalter
- 52: Versatzeinrichtung
- 53: Zylinder
- 54: Zylinderstößel
- 55: Flansch
- 56: Anschlag
- 57: Stirnseite
- 58: Abwickler
- 59: Tisch
- 60: Transporteinrichtung
- 61: Spleißeinrichtung
- 62: Abtransportband
- 63: Fördereinrichtung
- 64: Beruhigungsrolle
- 65: Reparaturband
- 66: Belegevorrichtung
- 67: Aufwickler
- 68: Längsschneideeinrichtung

## Patentansprüche

1. Greifvorrichtung (6) insbesondere für ein Rückzugssystem (1) einer Maschine zur Bearbeitung von klebrigen Cordmaterial, die eine Greifleiste (14) und ein Greifblech (15) aufweist, zwischen denen ein Greifspalt (16) ausgebildet ist, wobei die Greifleiste (14) gegenüber dem feststehendem Greifblech (15) um einen Drehpunkt (19) verschwenkbar ist, **wobei** der Drehpunkt (19) der Greifleiste (14) unterhalb einer Arbeitsebene (20) angeordnet ist, die durch eine der Greifleiste (14) zugewandte Oberseite(21) des Greifblechs (15) definiert ist, **dadurch gekennzeichnet, dass** die Greifleiste (14) in einer insbesondere teilkreisförmigen Kulissenführung (22) gelagert ist.

2. Greifvorrichtung nach Anspruch 1, **dadurch gekennzeichnet, dass** die Kulissenführung (22) zwei Nuten (23, 33) aufweist, die parallel zueinander verlaufen, wobei sie insbesondere an einander gegenüberliegenden Seiten eines Lagerblocks (32) ausgebildet sind.

3. Greifvorrichtung nach Anspruch 2, **dadurch gekennzeichnet, dass** die Greifleiste (14) an Seitenwangen (24, 37) befestigt ist, die jeweils über mindestens einen Kulissenstein (25, 34), insbesondere über mehrere Kulissensteine (25, 34), in einer der Nuten (23, 33) geführt sind.

4. Greifvorrichtung nach Anspruch 3, **dadurch gekennzeichnet, dass** zueinander benachbarte Seitenwangen (24, 37) über einen Gelenkkopf (38) miteinander verbunden sind, an dem ein Krafteinleitungspunkt (39) für einen Antrieb zum Schwenken der Greifleiste (14) ausgebildet ist.

5. Greifvorrichtung nach Anspruch 4, **dadurch gekennzeichnet, dass** am Gelenkkopf (38) eine Zylindereinheit (26) angreift, die insbesondere im Wesentlichen parallel zur Arbeitsebene (20) angeordnet ist.

6. Greifvorrichtung nach Anspruch 5, **dadurch gekennzeichnet, dass** die Zylindereinheit (26) mit einem von der Greifleiste (14) abgewandten Ende an einer Basis (17) der Greifvorrichtung (6) befestigt ist, an der auch das Greifblech (15) und der Lagerblock (32) befestigt sind.

7. Greifvorrichtung nach Anspruch 6, **dadurch gekennzeichnet, dass** die Basis (17) einen Flansch (28) aufweist, an dem die Zylindereinheit (26) angreift, wobei gegebenenfalls der Flansch (28) mit Verstärkungselementen (29) gegenüber der Basis (17) versteift ist.

8. Greifvorrichtung nach Anspruch 7, **dadurch gekennzeichnet, dass** der Flansch (28) an einer von der Greifleiste (14) abgewandten Seite eine Verbindungsgeometrie zum Befestigen der Greifvorrichtung (6) an einem Rückzug aufweist.

## Claims

1. Gripping device (6) in particular for a retraction system (1) of a machine for processing adhesive cord material which has a gripping strip (14) and a gripping sheet (15) between which a gripping gap (16) is configured, wherein the gripping strip (14) can be pivoted towards the fixed gripping sheet (15) about a rotational point (19), wherein the rotational point (19) of the gripping strip (14) is arranged below a work plane (20), which is defined by an upper side (21) of the gripping sheet (15) facing the gripping strip (14), **characterised in that** the gripping strip (14) is mounted in an in particular partly circular guide rail (22).

2. Gripping device according to claim 1, **characterised in that** the sliding guide (22) has two grooves (23, 33), which run parallel to each other, wherein they are formed in particular on opposing sides of a bearing block (32).

3. Gripping device according to claim 2, **characterised in that** the gripping strip (14) is fixed to side cheeks (24, 37), which are respectively guided via at least one sliding block (25, 34), in particular via a plurality of sliding blocks (25, 34), in one of the grooves (23, 33).

4. Gripping device according to claim 3, **characterised in that** side cheeks (24, 37) adjacent to each other are connected to each other via a joint head (38), on which a force transmission point (39) is configured for a drive to pivot the gripping strip (14).

5. Gripping device according to claim 4, **characterised in that** a cylinder unit (26) grips the joint head (38), said cylinder unit is in particular arranged substantially parallel to the work plane (20).

6. Gripping device according to claim 5, **characterised in that** the cylinder unit (26) is fixed with one end facing away from the gripping strip (14) to a base (17) of the gripping device (6) to which the gripping sheet (15) and the bearing block (32) are also fixed.

7. Gripping device according to claim 6, **characterised in that** the base (17) has a flange (28), which the cylinder unit (26) grips, wherein if necessary the flange (28) is strengthened with reinforcing elements (29) with respect to the base (17).

8. Gripping device according to claim 7, **characterised in that** the flange (28) has a connection geometry at one side facing away from the gripping strip (14) to fix the gripping device (6) to a retracting device.

## Revendications

1. Dispositif de préhension (6) en particulier pour un système de retour (1) d'une machine servant à usiner un cordage collant, lequel présente une baguette de préhension (14) et une tôle de préhension (15), entre lesquelles une fente de préhension (16) est réalisée, dans lequel la baguette de préhension (14) peut être pivotée autour d'un point de rotation (19) par rapport à la tôle de préhension (15) immobile, **dans lequel** le point de rotation (19) de la baguette de préhension (14) est disposé sous un plan de travail (20), qui est défini par un côté supérieur (21), tourné vers la baguette de préhension (14), de la tôle de préhension (15), **caractérisé en ce que** la baguette de préhension (14) est montée dans un guide de coulisse (22) en particulier en forme de cercle partiel.

2. Dispositif de préhension selon la revendication 1, **caractérisé en ce que** le guide de coulisse (22) présente deux rainures (23, 33), qui s'étendent de manière parallèle l'une par rapport à l'autre, dans lequel elles sont réalisées en particulier au niveau de côtés se faisant face les uns les autres d'un bloc de support (32).

3. Dispositif de préhension selon la revendication 2, **caractérisé en ce que** la baguette de préhension (14) est fixée au niveau de joues latérales (24, 37), qui sont guidées dans l'une des rainures (23, 33) respectivement par l'intermédiaire d'au moins un coulisseau (25, 34), en particulier par l'intermédiaire de plusieurs coulisseaux (25,34).

4. Dispositif de préhension selon la revendication 3, **caractérisé en ce que** des joues latérales (24, 37) adjacentes les unes aux autres sont reliées entre elles par l'intermédiaire d'une tête d'articulation (38), au niveau de laquelle un point d'introduction de force (39) est réalisé en vue d'un entraînement afin de faire pivoter la baguette de préhension (14).

5. Dispositif de préhension selon la revendication 4, **caractérisé en ce que** s'engage au niveau de la tête d'articulation (38) une unité de cylindre (26), qui est disposée en particulier sensiblement de manière parallèle par rapport au plan de travail (20).

6. Dispositif de préhension selon la revendication 5, **caractérisé en ce que** l'unité de cylindre (26) est fixée par une extrémité opposée à la baguette de préhension (14) au niveau d'une base (17) du dispositif de préhension (6), au niveau de laquelle la tôle de préhension (15) et le bloc de support (32) sont également fixés.

7. Dispositif de préhension selon la revendication 6, **caractérisé en ce que** la base (17) présente une bride (28), avec laquelle l'unité de cylindre (26) s'engage, dans lequel éventuellement la bride (28) est rigidifiée avec des éléments de renforcement (29) par rapport à la base (17).

8. Dispositif de préhension selon la revendication 7, **caractérisé en ce que** la bride (28) présente, au niveau d'un côté opposé à la baguette de préhension (14), une géométrie de liaison servant à fixer le dispositif de préhension (6) au niveau d'un retour.
